# EUROPÄISCHE PATENTSCHRIFT

(11) **EP 1 583 057 B1**
(45) Veröffentlichungstag und Bekanntmachung des Hinweises auf die Patenterteilung: **08.04.2009**
(21) Anmeldenummer: 04027436.7
(22) Anmeldetag: 18.11.2004
(51) Int. Cl.: G08G 1/04

(54) **Verfahren und System zur Überwachung eines Flächenareals**
Method and system for the surveillance of an area
Méthode et système pour la surveillance d'une surface

(30) Priorität: 31.03.2004 DE 102004015913
(43) Veröffentlichungstag der Anmeldung: 05.10.2005
(73) Patentinhaber: Funkwerk plettac electronic GmbH, 90766 Fürth (DE)
(72) Erfinder: Lederer, Karlheinz, 93161 Sinzing (DE)
(74) Vertreter: Eichstädt, Alfred

(56) Entgegenhaltungen:
- EP-A- 0 967 584
- DE-A1- 19 723 369
- GB-A- 2 379 502
- US-A1- 2001 017 933

## Beschreibung

Die Erfindung betrifft ein Verfahren und ein System zur Überwachung eines Flächenareals.

Im Bereich der Verkehrsleittechnik kann es erforderlich sein, dass zu Zeiten einer hohen Verkehrsbelastung eines Verkehrswege zur Aufrechterhaltung eines Verkehrsflusses ein zusätzlicher Fahrstreifen freigegeben wird. Dieser Fahrstreifen kann bei Autobahnen beispielsweise ein Seitenstreifen sein. Durch die Nutzung des Seitenstreifens als zusätzliche Fahrspur kann temporär eine Erhöhung der Verkehrskapazität und damit auch eine Reduzierung staubedingter Unfälle erreicht werden. Die beschränkte Freigabe des Seitenstreifens ist im Vergleich zu einer dauerhaften Ummarkierung hinsichtlich der Verkehrssicherheit, dem Verkehrsablauf und dem Betrieb der Autobahn vorteilhaft.

Eine Fahrspur eines Verkehrsweges muss aber vor ihrer Freigabe aus Sicherheitsgründen überwacht werden, um sicherzustellen, dass die Fahrspur in dem betreffenden Streckenabschnitt frei von stehenden Fahrzeugen, sonstigen Gegenständen und Personen ist und zu dem betreffenden Zeitpunkt nicht aufgrund einer Fahrzeugpanne, eines Notfalls oder dergleichen benötigt wird.

Die Überwachung von Seitenstreifen bzw. Standspuren von Autobahnen vor einer Freigabe für den Verkehr erfolgt bisher im Wesentlichen auf manuelle Weise. Hierbei werden von einem Operator entlang des betreffenden Autobahnabschnitts angeordnete, statische Kamerastationen bedient, so dass der Seitenstreifen an einem Monitor visuell auf etwaige Störobjekte begutachtet werden kann. Mittels jeder der einzelnen Kamerastationen ist ein bestimmter Abschnitt des Seitenstreifens einsehbar, wobei die einzelnen Abschnitte von dem Operator nacheinander begutachtet und somit abgearbeitet werden. Bei einer Überwachung, die im Vorfeld einer Freigabe eines mehrere Kilometer langen Seitenstreifens erfolgt, besteht das Problem, dass erhebliche Zeitlücken zwischen der Überprüfung der ersten Abschnitte des Seitenstreifens und der Freigabe des Seitenstreifens für den Verkehr auftreten können und nicht mit hinreichender Zuverlässigkeit sichergestellt ist, dass in den Zeitlücken Störobjekte in die bereits begutachteten Abschnitte geraten sind.

Ein solches System ist z.B. aus der GA-A-2 379 502 bekannt.

Auch bei der rein visuellen, mittels mehrerer Kamerastationen erfolgenden Überwachung von großen Flächen, wie beispielsweise von Großparkplätzen oder Firmengeländen, bestehet das Problem, dass die einzelnen Flächenabschnitte nicht in hinreichend kurzen Intervallen mit der jeweils zugeordneten Kamerastation angefahren und begutachtet werden können und so auf sicherheitsrelevante Störungen, wie Diebstahl oder dergleichen, nicht mit einer hinreichend kurzen Reaktionszeit reagiert werden kann.

Der Erfindung liegt die Aufgabe zugrunde, ein Verfahren zum Überwachen eines Flächenareals zu schaffen, das gegenüber dem Stand der Technik ein höheres Sicherheitsmaß gewährleistet.

Diese Aufgabe wird erfindungsgemäß durch das Verfahren mit den Merkmalen des Patentanspruches 1 gelöst.

Durch die Erfindung wird mithin ein Hilfsmittel bereitgestellt, das eine im Hintergrund ablaufende Überwachung eines Flächenareals zulässt, so dass das Flächenareal zuverlässig ohne große Zeitlücken auch nach einem vorzugsweise zuvor durchgeführten visuellen Überprüfen durch einen Operator automatisiert weiter überwacht werden kann. Hierbei werden insbesondere vordefinierte, den jeweiligen Flächenabschnitten bzw. -segmenten zugeordnete Kamerapositionen gezielt nacheinander angefahren und die aufgenommenen, aktuellen Prüfbilder mit den abgespeicherten Referenzbildern verglichen. Durch die automatisierte im Hintergrund ablaufende Überwachung kann ein Störobjekt als Ereignis erkannt werden, das dem Operator systemgesteuert mitgeteilt wird.

Durch eine wiederholte Durchführung der Prüfbildaufnahme für die Flächenabschnitte bzw. -segmente und dem anschließenden Vergleich mit den Referenzbildern kann das Flächenareal dauerhaft bis zu einer Unterbrechung durch einen Operator überwacht werden, ohne dass das Flächenareal von dem Operator fortwährend begutachtet wird.

Unmittelbar nach dem zur Erhöhung der Sicherheit durchgeführten visuellen Begutachten eines Flächenareals kann für dieses Flächenareal die im Hintergrund ablaufende Überwachung gestartet werden, wobei der Operator die visuelle Begutachtung in einem nächsten Flächenareal durch Ansteuerung einer diesem Areal zugeordneten Kamerastation fortsetzen kann. Die von dem Operator bereits visuell eingesehenen Flächenareale werden gemäß dem Verfahren nach der Erfindung im Hintergrund periodisch gescannt, wobei durch eine so genannte technische Video-Detektion, nämlich durch Vergleich der Prüfbilder mit den Referenzbildern, nachträglich aufgetretene sicherheitsrelevante Störobjekte erkannt werden. Diese Ereignisse werden dem Operator mitgeteilt.

Der im vorliegenden Zusammenhang verwendete Begriff "Störobjekt" umfasst ruhende und bewegte Objekte und Subjekte sowie in Abhängigkeit vom Anwendungsfall des Verfahrens nach der Erfindung auch sonstige Störungen, die sich beim Vergleich der Prüfbilder mit den Referenzbildern ergeben. Solche Störungen können beispielsweise im Bereich einer Parkplatzüberwachung auch fehlende Kraftfahrzeuge oder sonstige Änderungen bei der Anordnung der Kraftfahrzeuge sein.

Bei einer dynamischen Kamerastation handelt es sich im Gegensatz zu einer statischen Kamerastation um eine Bildaufnahmevorrichtung, deren optische Achse und deren Bildausschnitt durch Ansteuerung einer Verstelleinrichtung veränderbar sind.

Das Verfahren nach der Erfindung eignet sich insbesondere zur Überwachung mindestens einer Fahrspur eines Verkehrswegs, wobei eine Überwachung eines Seitenstreifens einer mehrspurigen Straße, wie einer Autobahn oder dergleichen, einen speziellen Anwendungsfall darstellt. Vorzugsweise wird das Verfahren so gestaltet, dass in Abhängigkeit von dem bei dem visuellen Begutachten bzw. Überprüfen und bei der sich an die visuelle Begutachtung anschließenden, automatisierten Hintergrundüberwachung gewonnenen Prüfergebnis bei Nicht-Detektion eines Störobjekts die überwachte Fahrspur für den Verkehr freigegeben werden kann oder bei Detektion eines Störobjekts gesperrt bleibt. Ein Störobjekt ist in diesem Fall beispielsweise eine Person, ein Pannenfahrzeug oder ein sonstiger den Verkehr behindernder Gegenstand auf der Fahrspur.

Durch Anwendung des Verfahrens nach der Erfindung zur Überwachung eines Seitenstreifens bzw. einer Standspur einer Autobahn zur Erhöhung der Verkehrskapazität der Autobahn ist es möglich, im Vorfeld einer Freigabe des Seitenstreifens als zusätzliche Fahrspur aufgrund ausgeprägter Verkehrsspitzen mit hoher Zuverlässigkeit eine Aussage hinsichtlich des Vorliegens etwaiger Störobjekte auf dem Seitenstreifen zu machen. Durch Anwendung des Verfahrens nach der Erfindung kann ohne große Zeitlücken erkannt werden, dass die Fahrspur frei von stehenden Fahrzeugen, sonstigen Fremdobjekte darstellenden Gegenständen oder Personen ist und nicht pannenbedingt oder notfallbedingt für andere Zwecke benötigt wird, da bei dem eingesetzten System in Hintergrund eine Aufnahme und Auswertung von Prüfbildern der einzelnen Flächen- bzw. Streckenabschnitte weiterläuft. Insbesondere verkürzen sich durch Anwendung des erfindungsgemäßen Verfahrens sicherheitsrelevante Zeitlücken zwischen dem eigentlichen Überwachungsvorgang und der Freigabe der Fahrspur beträchtlich. Ein Zyklus zur im Hintergrund ablaufenden Überwachung eines Fahrsputeilbereichs einer Länge von 500 m dauert beispielsweise 30 Sekunden, wenn der der Fahrspurteilbereich in 10 Streckenabschnitte unterteilt ist und die Prüfbildaufnahme und der Vergleich mit dem jeweils zugeordneten Referenzbild für jeden Streckenabschnitt 3 Sekunden in Anspruch nimmt.

Bei der bevorzugten Ausführung des Verfahrens nach der Erfindung in Verbindung mit einer Fahrspurfreigabe scannt ein Operator also vor der Freigabe der Fahrspur für den Verkehr die Fahrspur in dem zur Freigabe vorgesehenen Bereich visuell mittels mehrerer entlang der Fahrspur angeordneter, dynamischer Kamerastationen ab. Hierzu wird dem Operator auf einem so genannten Livebild-Monitor eine Live-Ansicht des von der jeweils angesteuerten Kamerastation erfassten Fahrspurbereichs präsentiert. Der Ablauf des visuellen Überprüfens, d. h. des Führens der Kameras der Kamerastationen entlang der Fahrspur kann automatisiert oder auch durch den Operator selbst manuell vorgenommen werden. Eine manuelle Ansteuerung der Kamerastationen hat den Vorteil, dass der Überprüfvorgang angehalten werden kann, um beispielsweise Bilddetails eingehend zu betrachten oder auch um die visuelle Überprüfung für andere Tätigkeiten zu unterbrechen.

Nach der visuellen Begutachtung eines jeden Fahrspurteilbereichs durch den Operator setzt die automatisierte Hintergrundüberwachung dieses Fahrspurteilbereichs ein, wobei für einzelne Flächenabschnitte des Teilbereichs Prüfbilder aufgenommen und mit einem dem jeweiligen Flächenabschnitt zugeordneten Referenzbild verglichen werden, so dass auch nach der visuellen Begutachtung in den betreffenden Fahrspurteilbereich gelangte Störobjekte rechtzeitig vor Freigabe der Fahrspur erkannt werden können.

Die automatisierte, im Hintergrund ablaufende Überwachung kann fortwährend, kalendergestützt oder auch nur im Vorfeld einer Freigabe einer Fahrspur für den Verkehr durchgeführt werden. Auf kritische Verkehrssituationen kann sehr schnell durch eine Freigabe der überwachten Fahrspur mit einem hohen Maße an Sicherheit reagiert werden.

Die Anwendung des Verfahrens nach der Erfindung ist nicht auf eine Fahrspurüberwachung beschränkt. Vielmehr kann das Verfahren beispielsweise auch zur Überwachung von Flächenarealen genutzt werden, wie sie bei Parkplätzen, Firmengeländen, Justizvollzugsanstalten oder dergleichen vorkommen.

Die bei dem Verfahren nach der Erfindung eingesetzte Kamerastation umfasst vorzugsweise eine auf einem motorisch angetriebenen Schwenk/Neige-Kopf angeordnete Kamera, die Temperaturbeständig ist, d. h. beispielsweise in einem Temperaturbereich zwischen -40°C und +65°C einsetzbar ist, und mittels der eine vektorgesteuerte Positionierung mit einer hohen Genauigkeit von beispielsweise 0,02° durchführbar ist. Zur Ermittlung der Referenzbilder und der Prüfbilder wird die Kamera schrittweise verschwenkt und/oder geneigt, so dass bei einer Überwachung einer Fahrspur in Verbindung mit einer Zoom-Funktion der Kamera hintereinander angeordnete Flächenabschnitte mit im Wesentlichen konstanten Abbildungsmaßstab abgescannt werden können. Durch mehrere, in einem bestimmten Abstand voneinander angeordnete Kamerastationen kann ein zu überwachendes Gebiet, beispielsweise eine zur Freigabe vorgesehene Fahrspur von mehreren Kilometern Länge, lückenlos abgebildet und überwacht werden.

Um bei Ermittlung eines Störobjekts zuverlässige Aussagen hinsichtlich der Art des Störobjekts machen zu können, ist es vorteilhaft, wenn ein potentielles Störobjekt nach der Mitteilung des betreffenden Ereignisses von dem Operator über einen Livebild-Monitor der Arbeitsstation verifiziert wird.

Um insbesondere eine Vielzahl von Ereignissen zuverlässig verifizieren zu können, wird bei einer speziellen Ausführungsform des Verfahrens nach der Erfindung eine Ereignisliste erstellt. Ein Operator kann dann bestimmte Ereignisse aus der Ereignisliste auswählen und einer weiteren Analyse zuführen. In der Ereignisliste sind beispielsweise Daten wie Kameranummer und/oder die Nummer des betreffenden Flächenareals, Flächenabschnitt, Datum, Uhrzeit und/oder auch Art des ermittelten potentiellen Störobjekts aufgelistet.

Die Arbeitsstation ist vorzugsweise so ausgeführt, dass bei Auswahl eines Ereignisses aus der Ereignisliste der dem betreffenden Ereignis zugeordnete Flächenabschnitt in Form eines Livebildes dargestellt wird. Vorzugsweise erfolgt hierzu bei Auswahl eines Ereignisses aus der Ereignisliste eine automatische Ansteuerung der Kamerastation, so dass diese in Richtung des dem betreffenden Ereignis zugeordneten Flächenabschnitts geschwenkt und/oder geneigt wird.

Um sicherzustellen, dass ein Operator das Auftreten eines Störobjekts kurzfristig verifizieren kann, ist es vorteilhaft, wenn die Bildauswerteeinrichtung mit einer Alarmeinrichtung zusammenwirkt. Die Alarmeinrichtung kann optische und/oder akustische Mittel umfassen.

Um eine Vergleichbarkeit zwischen den Referenzbildern und den Prüfbildern zu gewährleisten, werden die Referenzbilder für die einzelnen Flächenabschnitte vorzugsweise systemgesteuert aufgenommen. Der Aufnahmevorgang und der jeweilige Bildausschnitt entsprechen dabei vorzugsweise dem Aufnahmevorgang und dem Bildausschnitt bei der Aufnahme der Prüfbilder. Denkbar ist es aber auch, dass die Referenzbilder bei der manuellen Überwachung des Flächenareals gewonnen werden.

Um kurzfristige Änderungen in den einzelnen Flächenabschnitten des Flächenareals zuverlässig detektieren zu können, werden die Prüfbilder vorzugsweise bei einer nächsten, erneuten systemgesteuerten Prüfbildaufnahme als Referenzbilder für die einzelnen Flächenabschnitte genutzt.

Das Verfahren nach der Erfindung kann so geführt werden, dass nach dem Freigeben des Flächenareals zur automatisierten Hintergrundüberwachung die automatische Hintergrundüberwachung fortwährend durchgeführt wird und mithin eine wiederholte sukzessive Überwachung der einzelnen Flächenabschnitte des Flächenareals erfolgt, ohne dass eine unmittelbare visuelle Begutachtung durch den Operator erforderlich ist. Die Hintergrundüberwachung kann von einem Operator zu einem gewünschten Zeitpunkt gestoppt werden, beispielsweise wenn er ein Ereignis verifizieren möchte oder wenn eine Fahrspur für den Verkehr freigibt.

Um die Verifizierung eines Störobjekts zu erleichtern, kann das Verfahren nach der Erfindung so ausgelegt sein, dass bei Detektion eines Störobjekts eine Dialogprozedur zwischen der Arbeitsstation und dem Operator aufgebaut wird. Die Dialogprozedur kann durch bestimmte Abfragevorgänge die Verifizierung des Störobjekts beschleunigen. Beispielsweise kann eine Abfrage erfolgen, ob das verifizierte Störobjekt sogleich in einem vergrößerten Abbildungsmaßstab auf einem Livebild-Monitor dargestellt werden soll. Auch kann die Abfrage erfolgen, ob ein Abscannen der Umgebung eines detektierten potentiellen Störobjekts erfolgen soll, um auszuschließen, dass es sich bei dem Störobjekt beispielsweise um eine Schattenbildung durch einen in der Umgebung des Störobjekts positionierten Gegenstandes handelt.

Zur Analyse eines Störobjekts kann die Bildauswerteeinrichtung mit einer Grauwertanalyseeinrichtung versehen sein, die potenzielle Störobjekte von Umwelt- und Umgebungseinflüssen unterscheiden kann, und/oder mit einer Umgebungsmodellierung zusammenwirken, die beispielsweise tageszeit- und wetterbedingte Einflüsse berücksichtigen kann.

Vorzugsweise wird das Verfahren nach der Erfindung derart gesteuert, dass auch bewegte Objekte in dem Flächenareal erfasst werden können. Hierzu werden vorzugsweise in kurzer Abfolge aufgenommene Bilder eines Flächenabschnitts mittels der Bildauswerteeinrichtung verglichen. Die Erfassung bewegter Objekte kann auch schon vor dem Freigeben des Flächenareals zur automatisierten Hintergrundüberwachung im Hintergrund mittels der Steuereinrichtung durchgeführt werden, so dass die hierbei aufgenommenen Bilder der einzelnen Flächenabschnitte als erste Referenzbilder bei der systemgesteuerten Aufnahme und Auswertung der Prüfbilder genutzt werden können.

Die Arbeitsstation, die bei dem Verfahren nach der Erfindung eingesetzt wird, umfasst vorzugsweise zumindest einen Arbeitsmonitor und einen Livebild-Monitor. An dem Arbeitsmonitor werden insbesondere die einem Ereignis zugeordneten Prüfbilder und gegebenenfalls ein Schema des überwachten Flächenareals zusammen mit Kamerastationen dargestellt. Der Livebild-Monitor zeigt in Abhängigkeit von einer Ansteuerung der Kamerastation das tatsächliche gegenwärtige Abbild eines bestimmten Flächenabschnitts. Denkbar ist es, dass der Arbeitsmonitor und der Livebild-Monitor in einem gemeinsamen Monitor zusammengefasst sind, wobei jedem Monitor auf einer grafischen Benutzeroberfläche ein Fenster zugeordnet ist. Des Weiteren kann die Arbeitsstation einen Ereignismonitor umfassen, auf dem eine Ereignisliste und gegebenenfalls weitere Überwachungsdaten für das überwachte Flächenareal dargestellt sind.

Die Erfindung hat des Weiteren ein System zur Durchführung des erfindungsgemäßen Verfahrens mit den Merkmalen des Patentanspruches 15 zum Gegenstand.

Weitere Vorteile und vorteilhafte Ausgestaltungen des Gegenstandes nach der Erfindung sind der Beschreibung, der Zeichnung und den Patentansprüchen entnehmbar.

Ein Ausführungsbeispiel des Verfahrens nach der Erfindung wird nachfolgend anhand der schematisch vereinfachten Zeichnung beispielhaft beschrieben. Es zeigt
- Fig. 1: in schematisierter Weise einen Aufbau eines Systems zur Durchführung des Verfahrens nach der Erfindung, das zur Freigabe eines Seitenstreifens einer Autobahn eingesetzt wird;
- Fig. 2: beispielhaft eine Arbeitsstation bei Erkennen eines potentiellen Störobjekts in einem Streckenabschnitt des Seitenstreifens;
- Fig. 3: eine Bildschirmdarstellung eines Arbeitsmonitors bei Erkennen des Störobjekts; und
- Fig. 4: ein Flussdiagramm zur beispielhaften Durchführung des Verfahrens nach der Erfindung.

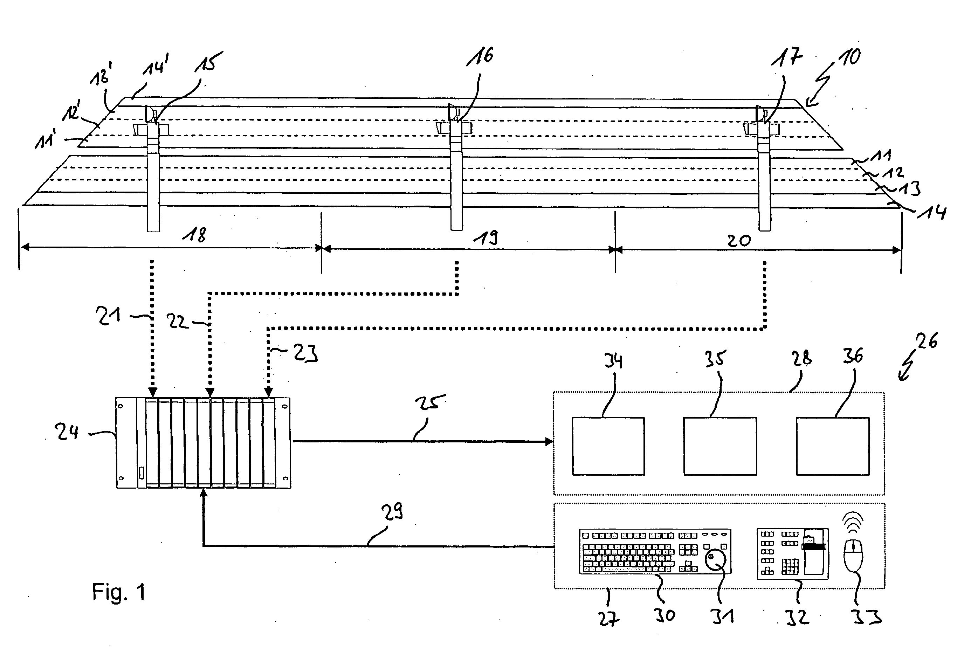

In Figur 1 ist ein Autobahnteilstück 10 dargestellt, das für beide Fahrtrichtungen jeweils drei Fahrspuren 11, 12 und 13 bzw. 11', 12' und 13' sowie einen Seitenstreifen 14 bzw. 14' aufweist. Im Normalbetrieb der Autobahn 10 sind die Fahrspuren 11, 12 und 13 für die eine Fahrtrichtung sowie 11', 12' und 13' für die andere Fahrtrichtung freigegeben und die Standspuren 14 und 14' für den Normalverkehr gesperrt. In Zeiten hoher Verkehrsbelastung kann es aber erforderlich sein, zumindest einen der Seitenstreifen 14, 14' temporär für den Normalverkehr freizugeben, so dass eine Erhöhung der Verkehrskapazität für die betreffende Fahrtrichtung erfolgt. Um die Seitenstreifen 14, 14' freigeben zu können, müssen diese zuvor überwacht werden, um sicherzustellen, dass sich keine störenden Objekte, wie beispielsweise ein Pannenfahrzeug, ein Reifen, eine Person oder dergleichen auf dem jeweiligen Seitenstreifen 14 bzw. 14' befindet und ein störungsfreier Betrieb der Autobahn von Seiten einer Verkehrsleitstelle sichergestellt werden kann.

Die Überwachung und Freigabe eines Seitenstreifens wird nachfolgend anhand des den Fahrspuren 11, 12, 13 zugeordneten Seitenstreifens 14 beschrieben.

Das in der Zeichnung dargestellte Autobahnteilstück 10 hat eine Länge von etwa 2,1 km. Entlang des Autobahnteilstücks 10 sind drei dynamische Kamerastationen 15, 16 und 17 angeordnet, die voneinander jeweils etwa 700 m beabstandet sind und zur Überwachung eines Abbildungsbereichs bzw. Teilbereichs 18, 19 bzw. 20 des Seitenstreifens 14 dienen. Die genauen Standorte der Kamerastationen 15, 16, 17 sind in Abhängigkeit von dem Streckenverlauf und von Umgebungseinflüssen ausgewählt. Die jeweils ein Flächenareal darstellenden Teilbereiche 18, 19 und 20 haben jeweils eine Länge von etwa 700 m.

Die Kamerastationen 15, 16 und 17 umfassen jeweils eine im sichtbaren Bereich und/oder im Infrarotbereich arbeitende Kamera, die auf einem motorisch betriebenen Schwenk/Neige-Kopf angeordnet ist. Durch Betätigung des Schwenk/Neige-Kopfes und eine Zoom-Funktion kann mit den Kamerastationen 15, 16 und 17 jeweils der zugeordnete Seitenstreifenteilbereich 18, 19 bzw. 20 vollständig erfasst und abgebildet werden. Die Kamerastationen 15, 16 und 17 können des Weiteren jeweils mit einem Weißlichtscheinwerfer, einem Infrarotscheinwerfer, einem Wischer, einem Wascher und auch mit einem Spinnwebenentferner versehen sein.

Die Montagehöhe der mit einer Bildstabilisierungstechnologie ausgestatteten Kameras der Kamerastationen 15, 16, 17 beträgt beispielsweise 6 m, so dass bei minimaler Brennweite der Kamera beispielsweise ein Teilabschnitt des Seitenstreifens einer Länge von etwa 113 m darstellbar ist.

Die Kamerastationen 15, 16, 17 sind jeweils über Steuerleitungen 21, 22 bzw. 23 mit einer so genannten Video-Alarmzentrale 24 verbunden, die mit einem Detektionsrechner und einer Steuereinrichtung für die Kamerastationen versehen ist und über die von den Kamerastationen 15, 16 und 17 aufgenommene Bilder über eine Datenverbindung 25 an einen Operatorarbeitsplatz 26 ausgegeben werden können.

Der Operatorarbeitsplatz 26 umfasst einen Steuerabschnitt 27 und einen Monitorabschnitt 28. Der Steuerabschnitt 27 ist zur Steuerung der Kamerastationen 15, 16, 17 und der Video-Alarmzentrale 24 über eine Steuerleitung 29 mit der Video-Alarmzentrale 24 verbunden. Der Steuerabschnitt 27 umfasst des Weiteren eine Tastatur 30, die mit einem so genannten Jog-Rad 31 versehen ist, eine manuelle Kamerasteuereinheit 32 sowie eine Maus 33. Der Monitorabschnitt 26 umfasst einen Ereignismonitor 34, einen Arbeitsmonitor 35 sowie einen Livebild-Monitor 36. Von dem Steuerabschnitt 27 aus kann die Steuereinrichtung für die Kamerastationen 15, 16, 17 in der Video-Alarmzentrale angesteuert werden.

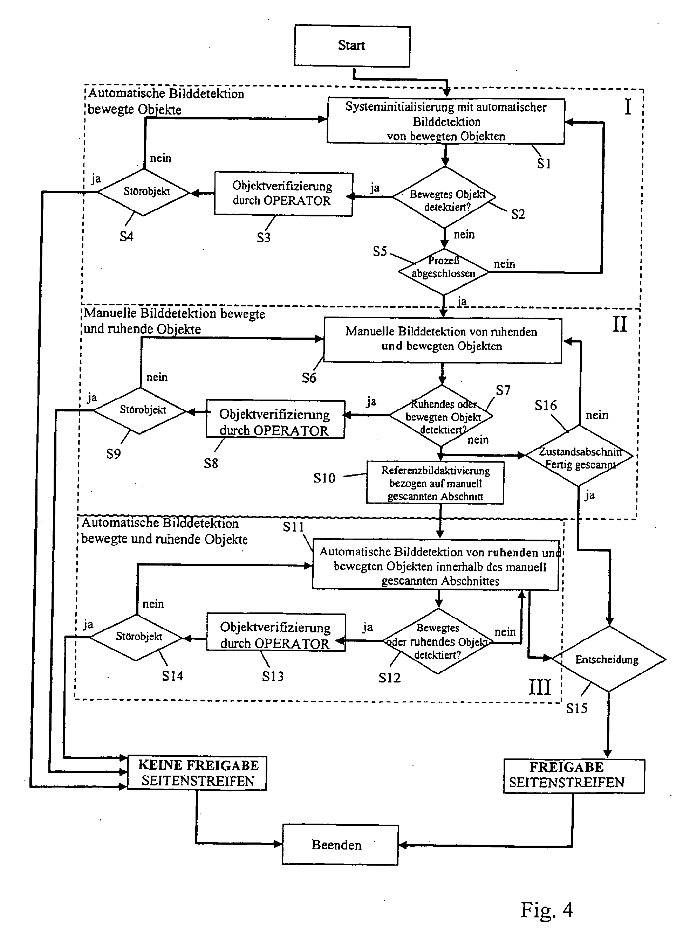

Ein erfindungsgemäß ausgestaltetes Verfahren zur Überwachung des Seitenstreifens 14 wird nachfolgend anhand des in Fig. 4 dargestellten Flussdiagramms beschrieben.

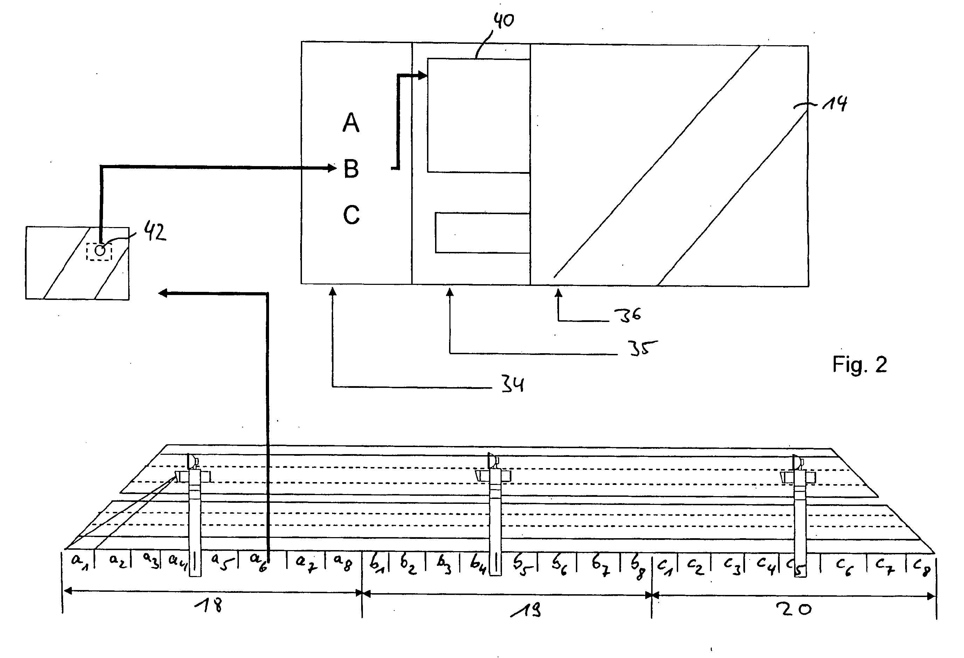

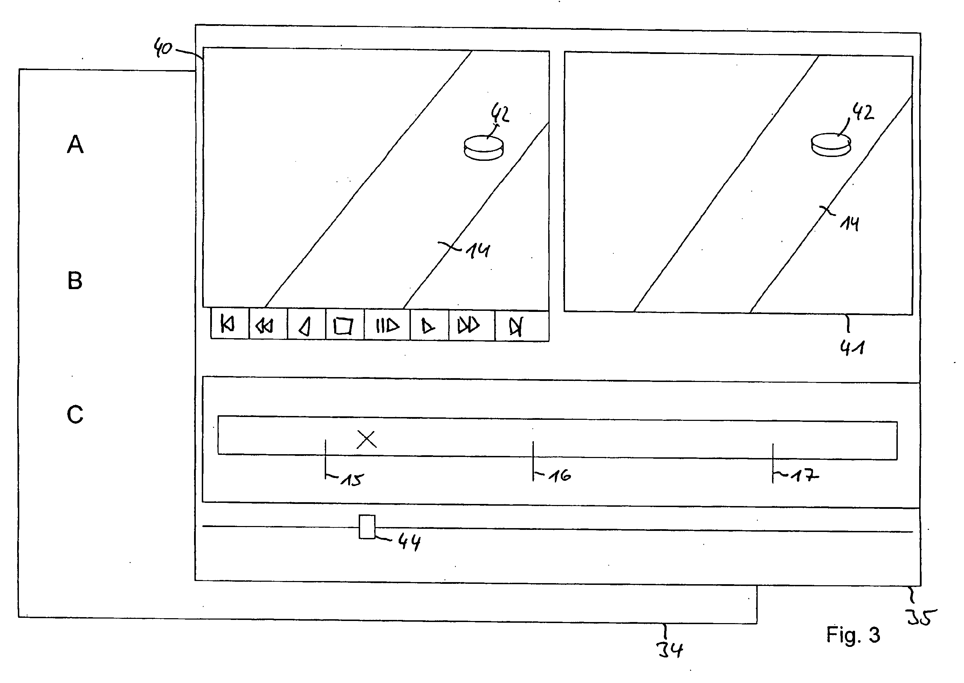

Bei Ausführung eines ersten Arbeitsblocks I wird nach Start der Überwachungsprozedur in einem Schritt S1 eine Initialisierung eines zur Durchführung des erfindungsgemäßen Verfahrens genutzten Datenverarbeitungssystems vorgenommen, bei welcher auch eine automatische Bilddetektion von bewegten Objekten erfolgt. Bei der Systeminitialisierung werden systemgesteuert, d. h. durch eine Steuereinrichtung vorgegeben, Referenzbilder einzelner, in Fig. 2 dargestellter Flächenabschnitte a₁ bis a₈, b₁ bis b₈ bzw. c₁ bis c₈ der jeweils einer Kamerastation 15, 16 bzw. 17 zugeordneten Flächenareale 18, 19 bzw. 20 aufgenommen. Die Systeminitialisierung bzw. die Aufnahme der Referenzbilder erfolgt im Hintergrund, d. h. es erfolgt keine Abbildung der Referenzbilder auf einem der Monitore des Monitorabschnitts 28. Die Referenzbilder der Flächenabschnitte a₁ bis a₈, b₁ bis b₈ und c₁ bis c₈ werden in einem Datenspeicher abgelegt. Bei der Darstellung in Fig. 3 ist die Kamerastation 15 auf den Flächenabschnitt a₁ gerichtet. In einem nächsten Aufnahmeschritt wird die Kamerastation 15 mittels des Schwenk/Neige-Kopfes in Richtung des Flächenabschnitts a₂, anschließend in Richtung des Flächenabschnitts a₃ gerichtet. Auf gleiche Weise wird fortgefahren, bis für alle Flächenabschnitte a₁ bis a₈, b₁ bis b₈ und c₁ bis c₈ mittels der jeweils zugeordneten Kamerastation 15, 16 bzw. 17 ein Referenzbild aufgenommen ist.

Die automatische Bilddetektion von bewegten Objekten erfolgt durch Aufnahme einer Vielzahl von Bildern innerhalb einer kurzen Zeitspanne von beispielsweise 5 Sekunden, wobei ein Vergleich der nacheinander aufgenommenen Bilder eines Flächenabschnitts mittels einer Bildauswerteeinrichtung durchgeführt wird. Hierzu werden so genannte Ringspeicherspuren angelegt, so dass die Möglichkeit besteht, einzelne Bilder und Sequenzen eines Ereignisses auszuwerten.

In einem Schritt S2 wird dann entschieden, ob in einem der Flächenabschnitte a₁ bis a₈, b₁ bis b₈, c₁ bis c₈ ein bewegtes Objekt vorhanden ist. Ein bewegtes Objekt wird als Ereignis aufgefasst und als solches in eine Ereignisliste eingetragen, die auf dem Ereignismonitor 34 dargestellt ist. Wenn ein solches Ereignis auftritt, kann der Operator in einem Schritt S3 das Ereignis aufrufen und das bewegte Objekt verifizieren. Beim Aufrufen des Ereignisses wird das in dem Speicher abgelegte Bild mit dem bewegten Objekt auf dem Ereignismonitor 35 in einem Fenster 40 einer Benutzeroberfläche dargestellt. Gleichzeitig wird in einem Fenster 41 der Benutzeroberfläche des Ereignismonitors 35 ein aktuelles, d. h. ein Live-Bild des betreffenden Flächenabschnitts eingeblendet. Der Operator entscheidet dann in einem Schritt S4, ob es sich um ein Störobjekt handelt oder nicht. Wenn es sich um ein Störobjekt handelt, kann keine Freigabe des Seitenstreifens 14 erfolgen. Wenn das bewegte Objekt nicht als Störobjekt bewertet wird, wird die Prozedur zur Erfassung von bewegten Objekten wiederholt, wobei die in diesem Zusammenhang aufgenommenen Bilder der Flächenabschnitte a₁ bis a₈, b₁ bis b₈ und c₁ bis c₈ als neue Referenzbilder in dem Speicher abgelegt werden.

In einem Schritt S5 wird dann entschieden bzw. bestimmt, ob die Aufnahme von Referenzbildern bzw. die Systeminitialisierung abgeschlossen ist. Wenn dies der Fall ist, wird in einem Arbeitsblock II eine manuelle Überprüfung bzw. Begutachtung des Seitenstreifens 14 auf bewegte und ruhende Objekte vorgenommen. Hierzu werden in einem Schritt S6 von dem Operator auf manuellem Wege mittels der Kamerasteuereinrichtung 32 die Flächenareale 18, 19 und 20 mit der jeweils zugeordneten Kamerastation 15, 16 bzw. 17 visuell überprüft. Das visuelle Überprüfen des Seitenstreifens erfolgt entlang einer in der Steuereinrichtung abgelegten Spur in kontinuierlicher Weise. Ein hierbei aufgenommenes Live-Bild wird an dem so genannten Livebild-Monitor 36 dargestellt. Wenn der Operator hierbei eine Ungewöhnlichkeit auf dem Seitenstreifen entdeckt, entscheidet er in einem Schritt S7, ob es sich um ein potentielles Störobjekt in Form eines ruhenden oder bewegten Objekts handeln kann oder nicht. Wenn dies der Fall ist, nimmt der Operator in einem Schritt S8 eine Objektverifizierung vor, die beispielsweise durch eine vergrößerte Darstellung, d. h. durch Betätigung einer Zoom-Funktion der betreffenden Kamerastation 15, 16 bzw. 17 erfolgen kann. Daraufhin entscheidet der Operator in einem Schritt S9, ob ein Störobjekt vorliegt oder nicht.

Wenn in dem Schritt S7 für das erste Flächenareal 18 des Seitenstreifens 14 entschieden wird, dass kein ruhendes oder bewegtes Objekt detektiert wurde, erfolgt in einem Schritt S10 eine Referenzbildaktivierung für das visuell fertig überprüfte Flächenareal 18. Damit wird für das Flächenareal 18 ein Bearbeitungsblock III gestartet, in dem eine automatische Bilddetektion bewegter und ruhender Objekte erfolgt. Gleichzeitig wird in einem Schritt S16 auch bestimmt, ob der gesamte Seitenstreifen abgescannt ist.

Der Operator setzt mithin im vorliegenden Fall die visuelle Überprüfung des Seitenstreifens in dem zweiten Flächenareal 19 mittels der Kamerastation 16 durch Ausführung des Bearbeitungsblocks II fort und gibt diesem dann für den Bearbeitungsblock III frei, wenn er kein Störobjekt detektieren kann. Auf diese Weise kann der gesamte Seitenstreifen sukzessiv visuell überwacht werden, wobei unmittelbar nach Abarbeiten eines Flächenareals dieses bei Nicht-Detektion eines Störobjekts dem Bearbeitungsblocks III zugeführt wird. Nach der visuellen Begutachtung aller Flächenareale 18, 19, 20 und bei Fehlen eines Störobjekts kann dann im Schritt S16 entschieden werden, dass der einen Zustandsabschnitt darstellende Seitenstreifen 14 vollständig erfasst ist, und in Schritt S15 eine Entscheidung hinsichtlich der Freigabe des Seitenstreifens 14 für den Verkehr getroffen werden.

In dem Bearbeitungsblock III erfolgt systemgesteuert eine automatisiert im Hintergrund ablaufende Überwachung, wobei für die einzelnen Flächenabschnitte a₁ bis a₈, b₁ bis b₈ bzw. c₁ bis c₈ in einem Schritt S11 entsprechend der oben beschriebenen Aufnahme der Referenzbilder Prüfbilder aufgenommen werden. Zur Aufnahme der Prüfbilder in dem Schritt S11 wird die betreffende Kamerastation 15, 16 bzw. 17 von einer der Arbeitsstation 26 zugeordneten Steuereinrichtung angesteuert, so dass schrittweise einzelne Prüfbilder der Flächenabschnitte a₁ bis a₈, b₁ bis b₈ bzw. c₁ bis c₈ aufgenommen werden. Diese Prüfbilder werden dann in einem ersten Prüfzyklus mit den in dem Datenspeicher bzw. der Bibliothek hinterlegten und im Block I aufgenommenen Referenzbildern für die einzelnen Flächenabschnitte a₁ bis a₈, b₁ bis b₈ bzw. c₁ bis c₈ mittels einer Bildauswerteeinrichtung beispielsweise durch Differenzbildbildung verglichen. In einem Schritt S12 wird dann entschieden, ob innerhalb des zuvor manuell überprüften Flächenareals 18, 19, 20 ein bewegtes oder ruhendes Objekt detektiert wurde. Wenn dies der Fall ist, erfolgt ein Eintrag in die auf dem Ereignismonitor 34 dargestellte Ereignisliste, in die bei dem in den Figuren 2 und 3 dargestellten Beispiel drei Ereignisse A, B und C eingetragen sind, die jeweils für ein potentielles Störobjekt stehen.

In einem Schritt S13 wird dann vom Operator das für das betreffende Ereignis detektierte Objekt verifiziert. Hierbei wählt er aus der Ereignisliste beispielsweise das Ereignis B aus, das dann anhand des für das Ereignis aufgenommenen Bildes in dem Fenster 40 des Arbeitsmonitors 35 dargestellt wird. Gleichzeitig wird in dem Fenster 41 das aktuelle Bild, d. h. ein Livebild des Flächenabschnitts, in dem das Objekt detektiert wurde, dargestellt. Zusätzlich kann der zugehörige Kilometerstand und die Nummer der betreffenden Kamerastation auf der Benutzeroberfläche eingeblendet sein. Bei dem in den Figuren 2 und dargestellten Beispiel handelt es sich bei dem Objekt um einen Autoreifen 42, der in dem Flächenabschnitt a₆ auf dem Seitenstreifen 14 angeordnet ist und der von dem Operator in einem Schritt S14 als Störobjekt bewertet wird, so dass keine Freigabe des Seitenstreifens 14 erfolgen kann. Bei der Objektverifizierung kann der Operator die Kamerabetätigungseinrichtung 32 betätigen, d. h. die Zoom- und/oder Schwenk/Neige-Koordinaten der betreffenden Kamerastation verändern und auf diesem Wege auch die Umgebung des Autoreifens 42 durch entsprechendes Schwenken der Kamera an dem Livebild-Monitor 36 begutachten.

Wird das bewegte oder ruhende Objekt in Schritt S14 nicht als Störobjekt bewertet, dann läuft im Hintergrund die systemgesteuerte Aufnahme von Prüfbildern schleifenartig weiter, so dass nach der Referenzbildaktivierung, d. h. nach Beenden des Arbeitsblocks II eine fortwährende Überwachung des der jeweiligen Kamerastation 15, 16, 17 zugeordneten Flächenareals 18, 19 bzw. 20 erfolgen kann.

Zu einem Zeitpunkt, zu dem aufgrund des Verkehrsaufkommens der Seitenstreifen 14 endgültig freigegeben werden soll, wird dann in Schritt S15 anhand der in den Arbeitsblöcken II und III gewonnenen Ergebnisse durch den Operator eine Entscheidung über die Freigabe des Seitenstreifens getroffen.

In einem Fenster 43 der Benutzeroberfläche des Arbeitsmonitors 35 wird ein Lageplan des überwachten Autobahnabschnitts zusammen mit den Kamerastationen 15, 16 und 17 schematisiert dargestellt, diese Darstellung ist der auch die in Fig. 3 beispielhaft durch ein X dargestellte Lage des in den Fenstern 40 und 41 dargestellten Flächenabschnitts zu entnehmen. Die aktuell angesteuerte Kamerastation ist optisch hervorgehoben. Mit einem Schieber 44, der mit der Maus des Steuerabschnitts 27 positionierbar ist, lässt sich der in den Fenstern 40 dargestellte Flächenabschnitt verändern, so dass in Längsrichtung des Seitenstreifens 14 die Umgebung des Störobjekts 42 begutachtet werden kann.

Auf dem Ereignismonitor 34 werden alle Ereignisse und Meldungen eines Video-Alarm-Managers angezeigt. Alle Ereignisse werden in ein Register eingetragen. Hiermit können aktuell oder zu einem späteren Zeitpunkt die gewünschten Meldungen mit den zugehörigen Bildern bzw. Videosequenzen angewählt und analysiert werden.

Mittels des Livebild-Monitors 36 kann des Weiteren eine Auswertung der abgespeicherten Bilder auf visuelle Weise vorgenommen werden.

Mit dem der Tastatur 30 zugeordneten Jog-Rad 31 kann ein Bildspeicher gesteuert werden und auch das visuelle Überprüfen des Seitenstreifens 14 erfolgen.

## Patentansprüche

1. Verfahren zur Überwachung eines in Flächenabschnitte (a1 bis a8, b1 bis b8, c1 bis c8) unterteilten Flächenareals (18, 19, 20), unter Verwendung mindestens einer dynamischen Kamerastation (15, 16, 17), die auf einem motorisch betriebenen Schwenk/Neige-Kopf angeordnet ist und mit einer Arbeitsstation (26) verbunden ist, die eine Steuereinrichtung und eine Bildauswerteeinrichtung umfasst, zumindest umfassend folgende Schritte:
- Aufnahme von Referenzbildern für die einzelnen Flächenabschnitte (a1 bis a8, b1 bis b8, c1 bis c8);
- Durchführung einer automatisierten, im Hintergrund ablaufenden Überwachung, wobei eine systemgesteuerte Aufnahme von-Prüfbildern für die einzelnen Flächenabschnitte (a1 bis a8, b1 bis b8, c1 bis c8) durch Ansteuerung der Kamerastation (15, 16, 17) mittels der Steuereinrichtung erfolgt, so dass die Kamerastation (15, 16, 17) schrittweise nacheinander die einzelnen Flächenabschnitte (a1 bis a8, b1 bis b8, c1 bis c8) erfasst;
- Vergleich der Prüfbilder jeweils mit dem dem betreffenden Flächenabschnitt (a1 bis a8, b1 bis b8, c1 bis c8) zugeordneten Referenzbild mittels der Bildauswerteeinrichtung;
- Mitteilen eines Ereignisses an einen Operator, wenn bei dem Vergleich zumindest eines der Prüfbilder mit dem dem betreffenden Flächenabschnitt zugeordneten Referenzbild ein Störobjekt (42) detektiert wird.

2. Verfahren nach Anspruch 1, **dadurch gekennzeichnet, dass** vor der Durchführung der automatisierten, im Hintergrund ablaufenden Überwachung das Flächenareal (18, 19, 20) an einem Monitor (36) der Arbeitsstation (26) durch einen Operator visuell überprüft wird.

3. Verfahren nach Anspruch 2, **dadurch gekennzeichnet, dass** in Abhängigkeit von einem Prüfergebnis bei dem visuellen Überprüfen des Flächenareals (18, 19, 20) eine Freigabe des Flächeareals (18, 19, 20) zur automatisierten, im Hintergrund ablaufenden Überwachung erfolgt.

4. Verfahren nach einem der Ansprüche 1 bis 3, **dadurch gekennzeichnet, dass** das Störobjekt von dem Operator über einen Livebild-Monitor der Arbeitsstation verifiziert wird.

5. Verfahren nach einem der Ansprüche 1 bis 4, **dadurch gekennzeichnet, dass** eine Ereignisliste erstellt wird.

6. Verfahren nach Anspruch 5, **dadurch gekennzeichnet, dass** bei Auswahl eines Ereignisses aus der Ereignisliste der dem betreffenden Ereignis zugeordnete Flächenabschnitt auf dem Livebild-Monitor dargestellt wird.

7. Verfahren nach einem der Ansprüche 1 bis 6, **dadurch gekennzeichnet, dass** die Bildauswerteeinrichtung mit einer Alarmeinrichtung zusammenwirkt.

8. Verfahren nach einem der Ansprüche 1 bis 7, **dadurch gekennzeichnet, dass** die Referenzbilder für die einzelnen Flächenabschnitte (a₁ bis a₈, b₁ bis b₈, c₁ bis c₈) mittels der Steuereinrichtung systemgesteuert ohne Begutachtung durch den Operator aufgenommen werden.

9. Verfahren nach einem der Ansprüche 1 bis 8, **dadurch gekennzeichnet, dass** die Prüfbilder bei einer weiteren systemgesteuerten Prüfbildaufnahme als Referenzbilder für die einzelnen Flächenabschnitte genutzt werden.

10. Verfahren nach einem der Ansprüche 1 bis 9, **dadurch gekennzeichnet, dass** bei Detektion eines Störobjekts eine Dialogprozedur zwischen der Arbeitsstation (26) und dem Operator aufgebaut wird.

11. Verfahren nach einem der Ansprüche 1 bis 10, **dadurch gekennzeichnet, dass** zur Detektion eines bewegten Objekts in kurzer Abfolge aufgenommene Bilder eines Flächenabschnitts mittels der Bildauswerteeinrichtung verglichen werden.

12. Verfahren nach einem der Ansprüche 1 bis 11, **dadurch gekennzeichnet, dass** die Kamerastation von dem Operator manuell ansteuerbar ist.

13. Verfahren nach einem der Ansprüche 1 bis 11, **dadurch gekennzeichnet, dass** die Arbeitsstation (26) zumindest einen Arbeitsmonitor (35) und einen Livebild-Montitor (36) umfasst.

14. Verfahren nach einem der Ansprüche 1 bis 13, **dadurch gekennzeichnet, dass** das Flächenareal (18, 19, 20) ein Teilstück einer Fahrspur einer Straße, insbesondere eines Seitenstreifens (14) einer Autobahn (10) ist.

15. System zur Überwachung eines in Flächenabschnitte (a1 bis a8, b1 bis b8, c1 bis c8) unterteilten Flächenareals (18, 19, 20), mit mindestens einer dynamischen Kamerastation (15, 16, 17), die auf einem motorisch betriebenen Schwenk/Neige-Kopf angeordnet ist und die mit einer Arbeitsstation (26) verbunden ist, die eine Steuereinrichtung umfasst, des Weiteren umfassend:
- eine Einrichtung zur Aufnahme von Referenzbildern für die einzelnen Flächenabschnitte (a1 bis a8, b1 bis b8, c1 bis c8);
- eine Einrichtung zur Durchführung einer automatisierten, im Hintergrund ablaufenden Überwachung, wobei eine systemgesteuerte Aufnahme von Prüfbildern für die einzelnen Flächenabschnitte (a1 bis a8, b1 bis b8, c1 bis c8) durch Ansteuerung der Kamerastation (15, 16, 17) mittels der Steuereinrichtung erfolgt, so dass die Kamerastation (15, 16, 17) schrittweise nacheinander die einzelnen Flächenabschnitte (a1 bis a8, b1 bis b8, c1 bis c8) erfasst;
- eine Bildauswerteeinrichtung zum Vergleich der Prüfbilder jeweils mit dem dem betreffenden Flächenabschnitt (a1 bis a8, b1 bis b8, c1 bis c8) zugeordneten Referenzbild;
- eine Einrichtung zum Mitteilen eines Ereignisses an einen Operator, wenn bei dem Vergleich zumindest eines der Prüfbilder mit dem dem betreffenden Flächenabschnitt zugeordneten Referenzbild ein Störobjekt (42) detektiert wird.

## Claims

1. Method of monitoring a surface area (18, 19 20), which is subdivided into surface sections (a1 to a8, b1 to b8, c1 to c8), with use of at least one dynamic camera station (15, 16, 17), which is arranged on a motor-operated pan/tilt head and is connected with a work station (26), which comprises a control device and an image evaluating device, comprising at least the following steps:
- recording reference images for the individual surface sections (a1 to a8, b1 to b8, c1 to c8);
- performing an automated monitoring taking place in the background, wherein a system-controlled recording of check images for the individual surface sections (a1 to a8, b1 to b8, c1 to c8) is carried out by drive control of the camera station (15, 16, 17) by means of the control device so that the camera station (15, 16, 17) detects the individual surface section (a1 to a8, b1 to b8, c1 to c8) in steps in succession;
- comparison of the check images respectively with the reference image, which is associated with the relevant surface section (a1 to a8, b1 to b8, c1 to c8), by means of the image evaluating device; and
- communicating an event to an operator when in the comparison of at least one of the check images with the reference image associated with the relevant surface section an interference object (42) is detected.

2. Method according to claim 1, **characterised in that** prior to performance of the automated monitoring taking place in the background the surface area (18, 19, 20) is visually checked at a monitor (36) of the working station (26) by an operator.

3. Method according to claim 2, **characterised in that** a freeing of the surface area (18, 19, 20) for automated monitoring taking place in the background is carried out in dependence on a check result in the visual checking of the surface area (18, 19. 20).

4. Method according to any one of claims 1 to 3, **characterised in that** the interference object is verified by the operator by way of a live-image of the work station.

5. Method according to any one of claim 1 to 4, **characterised in that** an events list is created.

6. Method according to claim 5, **characterised in that** on selection of an event from the events list the surface section associated with the respective event is illustrated on the live-image monitor.

7. Method according to any one of claims 1 to 6, **characterised in that** the image evaluating device co-operates with an alarm device.

8. Method according to any one of claims 1 to 7, **characterised in that** the reference images for the individual surface sections (a1 to a8, b1 to b8, c1 to c8) are system-controlled by means of the control device without inclusion of assessment by the operator.

9. Method according to any one of claims 1 to 8, **characterised in that** the check images are used in a further system-controlled check image recording as reference images for the individual surface sections.

10. Method according to any one of claims 1 to 9, **characterised in that** on detection of an interference object a dialogue procedure between the work station (26) and the operator is set up.

11. Method according to any one of claims 1 to 10, **characterised in that** images of a surface section recorded in short succession are compared by means of the image evaluating device for detection of a moved object.

12. Method according to any one of claims 1 to 11, **characterised in that** the camera station is manually controllable in drive by the operator.

13. Method according to any one of claims 1 to 11, **characterised in that** the work station (26) comprises at least one work monitor (35) and live-image monitor (36).

14. Method according to any one of claims 1 to 13, **characterised in that** the surface area (18, 19, 20) is a component of a travel lane of a road, particularly a hard shoulder (14) of a motorway (10).

15. System for monitoring a surface area (18, 19, 20), which is subdivided into surface sections (a1 to a8, b1 to b8, c1 to c8), with at least one dynamic camera station (15, 16, 17), which is arranged on a motor-operated pan/tilt head and which is connected with a work station (26), which comprises a control device, further comprising:
- a device for recording reference images for the individual surface sections (a1 to a8, b1 to b8, c1 to c8);
- a device for performance of an automated monitoring taking place in the background, wherein a system-controlled recording of check images for the individual surface sections (a1 to a8, b1 to b8, c1 to c8) is carried out by drive control of the camera station (15, 16, 17) by means of the control device so that the camera station (15, 16, 17) detects the individual surface sections (a1 to a8, b1 to b8, c1 to c8) in steps in succession;
- an image evaluating device for comparing the check images respectively with the reference image associated with the relevant surface section (a1 to a8, b1 to b8, c1 to c8); and
- a device for communicating an event to an operator when an interference object (42) is detected in the comparison of at least one of the check images with the reference image associated with the relevant surface section.

## Revendications

1. Dispositif de surveillance d'une surface (18, 19, 20) divisée en sections de surface (a1 à a8, b1 à b8, c1 à c8), utilisant au moins une station de caméra dynamique (15, 16, 17), laquelle est disposée sur une tête de pivotement/d'inclinaison actionnée par un moteur et est reliée à une station de travail (26), laquelle comporte un dispositif de pilotage et un dispositif d'analyse des images, comprenant au moins les étapes suivantes consistant à :
- copier des images de référence pour les sections de surface individuelles (a1 à a8, b1 à b8, c1 à c8) ;
- réaliser une surveillance en arrière-plan automatisée, une copie pilotée par le système des images de contrôle étant effectuée pour les sections de surface individuelles (a1 à a8, b1 à b8, c1 à c8) par la commande de la station de caméra (15, 16, 17) au moyen du dispositif de pilotage, de sorte que la station de caméra (15, 16, 17) détecte progressivement les unes après les autres les sections de surface individuelles (a1 à a8, b1 à b8, c1 à c8) ;
- comparer les images de contrôle respectivement avec l'image de référence attribuée à la section de surface individuelle concernée (a1 à a8, b1 à b8, c1 à c8) au moyen du dispositif d'analyse des images ;
- communiquer un événement à un opérateur, lorsqu'un objet parasite (42) a été détecté lors de la comparaison au moins d'une des images de contrôle avec l'image de référence attribuée à la section de surface concernée.

2. Dispositif selon la revendication 1, **caractérisé en ce que** la surface (18, 19, 20) est surveillée de façon visuelle par un opérateur sur l'écran (36) de la station de travail (26) avant la réalisation de la surveillance en arrière-plan automatisée.

3. Dispositif selon la revendication 2, **caractérisé en ce qu'**une validation de la surface (18, 19, 20) est effectuée par une surveillance en arrière-plan automatisée en fonction d'un résultat de contrôle obtenu lors d'un contrôle visuel de la surface (18, 19,20).

4. Dispositif selon l'une quelconque des revendications 1 à 3, **caractérisé en ce que** l'objet parasite est vérifié par l'opérateur sur l'écran de la station de travail affichant les images en temps réel.

5. Dispositif selon l'une quelconque des revendications 1 à 4, **caractérisé en ce qu'**une liste d'événements est générée.

6. Dispositif selon la revendication 5, **caractérisé en ce que** la section de surface attribuée à l'événement concerné est représentée sur l'écran affichant les images en temps réel lors de la sélection d'un événement dans la liste d'événements.

7. Dispositif selon l'une quelconque des revendications 1 à 6, **caractérisé en ce que** le dispositif d'analyse des images agit conjointement avec un système d'alarme.

8. Dispositif selon l'une quelconque des revendications 1 à 7, **caractérisé en ce que** les images de référence des sections de surface individuelles (a1 à a8, b1 à b8, c1 à c8) sont copiées par l'opérateur sans expertise au moyen du dispositif de pilotage.

9. Dispositif selon l'une quelconque des revendications 1 à 8, **caractérisé en ce que** les images de contrôle servent d'images de référence pour les sections de surface individuelles en cas de copie d'une image de contrôle supplémentaire pilotée par le système.

10. Dispositif selon l'une quelconque des revendications 1 à 9, **caractérisé en ce qu'**une procédure de dialogue est établie entre la station de travail (26) et l'opérateur lorsqu'un objet parasite est détecté.

11. Dispositif selon l'une quelconque des revendications 1 à 10, **caractérisé en ce que** les images copiées d'une section de surface sont comparées au moyen du dispositif d'analyse des images lorsqu'un objet mobile est détecté dans une séquence courte.

12. Dispositif selon l'une quelconque des revendications 1 à 11, **caractérisé en ce que** la station de caméra peut être pilotée manuellement par l'opérateur.

13. Dispositif selon l'une quelconque des revendications 1 à 11, **caractérisé en ce que** la station de travail (26) comprend au moins un écran de travail (35) et un écran (36) affichant les images en temps réel.

14. Dispositif selon l'une quelconque des revendications 1 à 13, **caractérisé en ce que** la surface (18, 19, 20) est un élément d'une voie de circulation d'une route, plus particulièrement d'un accotement (14) d'une autoroute (10).

15. Système de surveillance d'une surface (18, 19, 20) divisée en sections de surface (a1 à a8, b1 à b8, c1 à c8), avec au moins une station de caméra dynamique (15, 16, 17), laquelle est disposée sur une tête de pivotement/d'inclinaison actionnée par un moteur et est reliée à une station de travail (26), laquelle comprend un dispositif de pilotage, comprenant en outre :
- un dispositif de copie des images de référence pour les sections de surface individuelles (a1 à a8, b1 à b8, c1 à c8) ;
- un dispositif pour réaliser une surveillance en arrière-plan automatisée, une copie pilotée par le système des images de contrôle des sections de surface individuelles (a1 à a8, b1 à b8, c1 à c8) étant effectuée par le pilotage de la station de caméra (15, 16, 17) au moyen du dispositif de pilotage, de sorte que la station de caméra (15, 16, 17) détecte progressivement les unes après les autres les sections de surface individuelles (a1 à a8, b1 à b8, c1 à c8) ;
- un dispositif d'analyse des images destiné à comparer les images de contrôle respectivement avec l'image de référence attribuée à la section de surface concernée (a1 à a8, b1 à b8, c1 à c8) ;
- un dispositif destiné à communiquer un événement à un opérateur, lorsqu'un objet parasite (42) est détecté lors de la comparaison au moins d'une des images de contrôle avec l'image de référence attribuée à la section de surface concernée.
